# EUROPÄISCHE PATENTSCHRIFT

(11) **EP 3 222 833 B1**
(45) Veröffentlichungstag und Bekanntmachung des Hinweises auf die Patenterteilung: **28.07.2021**
(21) Anmeldenummer: 17162745.8
(22) Anmeldetag: 24.03.2017
(51) Int. Cl.: F01N 3/20, F01N 3/08, F01N 11/00, G01M 15/10, F02D 41/22, F02D 41/02, F02D 41/14

(54) **VERFAHREN ZUR ÜBERPRÜFUNG DER NOX-EMISSIONEN EINES FAHRZEUGS**
METHOD FOR MONITORING THE NOX EMISSIONS OF A VEHICLE
PROCÉDÉ DE CONTRÔLE DES ÉMISSIONS DE NOX D'UN VÉHICULE

(30) Priorität: 25.03.2016 AT 502492016
(43) Veröffentlichungstag der Anmeldung: 27.09.2017
(73) Patentinhaber: AVL DiTest GmbH, 8020 Graz (AT)
(72) Erfinder: Schweiger, David, 8010 Graz (AT); Lukesch, Walter, 8041 Graz (AT); Kohl, Anton, 8263 Großwilfersdorf (AT)
(74) Vertreter: Patentanwälte Pinter & Weiss OG

(56) Entgegenhaltungen:
- WO-A1-99/25965
- WO-A1-2013/152780
- DE-A1-102014 118 714
- US-A1- 2012 096 836
- Robert Bosch Gmbh: "Bosch BEA 750 - exhaust-measuring system Innovative solutions for a clean environment", , 31 July 2015 (2015-07-31), XP055666645, Retrieved from the Internet: URL:https://aa-boschww-it.resource.bosch.c om/media/common_used_media/ww/products/tes t_equipment_products_workshopworld_1/conte nt_update_august_2015/aa_as_tem_bea750_fol der_en_fact_66852.pdf [retrieved on 2020-02-10]

## Beschreibung

Die gegenständliche Erfindung betrifft ein Verfahren zur Überprüfung der NOx-Emissionen eines Fahrzeugs mit Verbrennungsmotor und mit einem System zur Reduzierung der NOx-Emissionen.

Bei der periodischen technischen Fahrzeugüberprüfung sind für ein Fahrzeug mit einem Verbrennungsmotor vom Gesetzgeber bestimmte Überprüfungen vorgesehen. Dabei wird überprüft, ob das Fahrzeug den gesetzlichen Anforderungen entspricht, um die weitere Zulassung zum Betrieb des Fahrzeugs zu erhalten. Diese periodischen technischen Fahrzeugüberprüfungen finden in der Regel in herkömmlichen Werkstätten oder eigenen Überprüfungsstellen für Fahrzeuge statt. Dabei kommt herkömmliche Werkstätten-Messtechnik zum Einsatz.

Gemäß dem aktuellen Stand erfolgt bei der periodischen technischen Fahrzeugüberprüfung keine Überprüfung der Stickoxid (NOx)-Emissionen des Fahrzeugs. Eine NOx Messung findet zur Zeit nur bei der Typzulassung eines Fahrzeugs auf einem Leistungsprüfstand statt. Dabei kommt komplexe und aufwendige Prüfstandsmesstechnik zur Anwendung, auf die eine Werkstatt keinen Zugang hat. Nach der Typzulassung erfolgt während der gesamten Laufzeit eines Fahrzeugs keine Überprüfung der NOx-Emissionen mehr. Das liegt zum einen an der verfügbaren Messtechnik selbst. Zur Messung von Stickoxiden sind mehrere Verfahren bekannt. Die am weitest verbreiteten Methoden zur Messung der NOx-Emissionen sind die Messung mittels chemischer Sensoren, Ultraviolett (UV)-Absorptionsmessung und die Messung mit keramischen Sensoren (z.B. Zirconoxidsensoren).

Zur Sauerstoffmessung werden standardmäßig chemische Senosren eingesetzt, deshalb ist es einfach bestehende Messsysteme um einen weiteren chemischen Sensor zur NOx-Messung zu erweitern. Bei Verwendung von chemischen Sensoren muss das Abgas vergleichsweise aufwändig aufbereitet werden, um die chemischen Sensoren nicht zu beschädigen. Insbesondere dürfen die Abgastemperatur und Abgasfeuchtigkeit nicht zu hoch sein und alle im Abgas enthaltenen festen Partikel müssen vor der Messung entfernt sein. Ein weiteres Manko der chemischen Sensoren ist, dass sie selbst nur bis zu einer bestimmten Beladung mit Stickoxidmolekülen arbeiten, sich also selbst verbrauchen. Hohe Ansprechzeiten machen chemische Sensoren auch nicht geeignet für transiente Messungen von Fahrzeugabgasen. Chemische Sensoren sind daher für den Werkstättenbetrieb nur bedingt geeignet.

NDUV (nicht dispersive Ultraviolette) basierte Messgeräte haben den Vorteil sich nicht zu verbrauchen und verfügen außerdem über gute Ansprechzeiten. Die großen Nachteile liegen in den hohen Anschaffungskosten und dem hohen Gewicht, was sie für den Einsatz in Werkstätten meist ausschließt.

Keramische Sensoren finden seit längerem Einsatz im Fahrzeug. Dort werden sie ähnlich zu Lambdasonden zur Sauerstoffmessung verwendet. Auch keramische Sensoren können zur Messung von NOx-Messung verwendet werden. Der Vorteil dieser Sensoren besteht darin, dass keine aufwändige Abgasaufbereitung stattfinden muss und sie so gut wie überall angebracht werden können. Zur Zeit gibt es aber noch keine unabhängigen Aussagen über Langzeitstabilität, Genauigkeit und Ansprechverhalten bei der Verwendung in Messgeräten für die Werkstatt. Die Verwendbarkeit solcher keramischer Sensoren zur Messung der NOx-Emissionen eines Fahrzeugs in Werkstätten ist daher ungeklärt.

Zum anderen liegt es aber auch daran, dass es keine geeigneten, reproduzierbaren Verfahren gibt, mit denen die NOx-Emissionen in Werkstätten verlässlich und aussagekräftig gemessen werden können. Entscheidend ist hier, dass solche Verfahren geeignet sein müssen, also insbesondere einfach und kostengünstig sein müssen, um in Werkstätten oder Überprüfungsstellen eingesetzt werden zu können.

Als Stand der Technik offenbart die Veröffentlichung WO 2013/152780 A1 z.B. ein Diagnoseverfahren für ein SCR-System eines Fahrzeugs mit Verbrennungsmotor zur Überprüfung der ordnungsgemäßen Funktion eines im Abgasstrang des Fahrzeugs angeordneten NOx-Sensors. Zur Überprüfung des NOx-Sensors ist vorgesehen, dass sich das Fahrzeug im Ruhezustand befindet und dass der Verbrennungsmotor in einem bestimmten Ablauf definierter Zyklen betrieben wird. Nachteilig bei dem Verfahren ist, dass damit nur der im Fahrzeug verbaute Sensor überprüft werden kann und dass Eingriffe in die Motorsteuerung, beispielsweise zur Deaktivierung der Harnstoffeinspritzung des SCR-Katalysators erforderlich sind.

Die WO 99/25965 A1 offenbart ein On-Board-Monitoring-Verfahren eines Fahrzeuges zur Überwachung von Emissionen, insbesondere der HC-Emissionen bzw. zur Überprüfung der Funktion eines 3-Wege-Katalysators während des Betriebs des Fahrzeugs auf der Straße. Es wird nur dann Messsignale gemessenen Schadstoffs (HC, NOx) berücksichtigt und mit einem Emissions-Grenzwert verglichen, wenn ein festgelegter Grenzwert eines "qualifying condition Signals" überschritten wird. Daraus wird z.B. ein Prozentsatz berechnet und mit einem vorgegebenen Grenzwert verglichen. Bei Überschreiten des Grenzwerts kann eine Warnleuchte aktiviert werden.

Ferner zeigt eine Broschüre der Firma BOSCH einen bekannten Abgastester vom Typ Bosch BEA 750 wie er üblicherweise in KFZ-Werkstätten zum Einsatz kommt, um den Schadstoffausstoß des Fahrzeugs überprüfen zu können. Diese Produktbroschüre wurde im Juli 2015 [2015-07-31] online veröffentlicht, insbesondere ist die Produktbroschüre unter dem link https://aa-boschww-it.resource.bosch.com/media/common_used_media/ ww/products/test_equipment_products_workshopworld_1/content_update_august_2015/ aa_as_tem_bea750_folder_en_fact_66852.pdf zugänglich.

Die DE 102014 118714 A1 offenbart ein Verfahren zur Diagnose eines im Abgasstrang eines Motors angeordneten SCR-Katalysators. Vor und nach dem SCR-Katalysator ist jeweils ein NO_{X}-Sensor zur Messung der NO_{X}-Konzentration im Abgas vorgesehen. Durch Differenz bildung der Messsignale der beiden NO_{X}-Sensoren und Division durch den Wert vor dem Katalysator wird eine Umsatzrate berechnet, welche ein Maß für die Verschlechterung des SCR-Katalysators ist.

Es ist daher das Ziel der gegenständlichen Erfindung trotz der messtechnischen Einschränkungen in Werkstätten bei der periodischen technischen Fahrzeugüberprüfung eines Fahrzeugs mit Verbrennungsmotor und einem beliebigen Abgasnachbehandlungssystem eine Aussage über die NOx-Emissionen und damit auch über den Zustand des Abgasnachbehandlungssystems machen zu können.

Diese Aufgabe wird erfindungsgemäß dadurch gelöst, dass der Verbrennungsmotor im Stillstand und im Leerlauf des Fahrzeugs einer Testprozedur unterworfen wird, bei der der Verbrennungsmotor aus einer Startdrehzahl zwischen einer vorgegebenen Leerlaufdrehzahl und einer Drehzahl von 15 - 20% der Höchstdrehzahl des Verbrennungsmotors innerhalb einer Zeit t₁ von 3 bis 12 Sekunden, vorzugsweise 4 bis 11 Sekunden, auf eine Zieldrehzahl von 30 - 70% der Höchstdrehzahl des Verbrennungsmotors beschleunigt wird, nach dem Erreichen der Zieldrehzahl diese für eine Zeitspanne t₂ von zumindest 3 Sekunden, vorzugsweise mindestens 5 Sekunden, gehalten wird und danach die Drehzahl wieder abgesenkt wird, während der Durchführung der Testprozedur die NOx-Emission im Abgas des Fahrzeugs gemessen wird, indem am Auspuff des Fahrzeugs Abgas mit einer Abgassonde entnommen und einem Messgerät zugeführt wird und dass auf einen Fehler im System zur Reduzierung der NOx-Emissionen des Fahrzeugs geschlossen wird, wenn in den gemessenen NOx-Emissionen während der Testprozedur ein Anstieg erkannt wird.

Mit der Erfindung wird das Ziel verfolgt eine Testprozedur zu schaffen, die unabhängig von einer NOx-Messtechnik eine verlässliche und aussagekräftige Aussage über den technischen Zustand des gesamten NOx relevanten Abgasnachbehandlungssystems ermöglicht. Dabei kommt es nicht auf die genauen Wert der NOx-Emission an, was das Verfahren von der verwendeten Messtechnik unabhängig macht, sondern auf die Kategorisierung in fehlerfrei und fehlerbehaftet. Dabei stellt die erfindungsgemäße Testprozedur sicher, dass es während der Testprozedur im Fehlerfall zu einem klar detektierbaren NOx-Signal kommt. Mit dieser in einer periodischen technischen Fahrzeugüberprüfung gewonnenen Erkenntnis kann das Fahrzeug dann im Fehlerfall einer genaueren Untersuchung unterzogen werden. Auf diese Weise gelingt es, Fahrzeuge mit erheblichen NOx-Emissionen zu erkennen und aus dem Verkehr zu ziehen, oder einer entsprechenden Reparatur zu unterziehen, was bisher nicht möglich war.

Um eine sichere Durchführung des Tests bei gleichen Bedingungen sicherzustellen, kann vorgesehen sein, dass der Verbrennungsmotor bzw. der Abgasstrang vor der Durchführung der Testprozedur auf eine bestimmte Temperatur gebracht wird. Das kann in einer vorteilhaften Ausgestaltung auch durch Auslesen eines Temperaturwertes über eine Diagnoseschnittstelle des Fahrzeugs sichergestellt werden.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 ein Fahrzeug in einer Werkstattumgebung in einer periodischen technischen Fahrzeugüberprüfung,
Fig.2 eine erfindungsgemäße Testprozedur für das Fahrzeug,
Fig.3 bis 6 NOx-Emissionsverläufe jeweils während der Testprozedur.

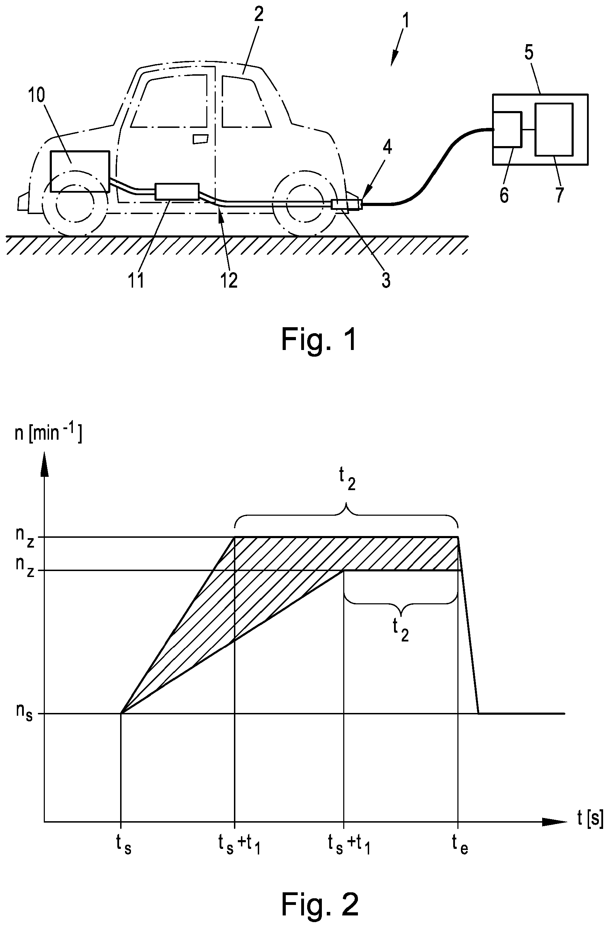

Die erfindungsgemäße Überprüfung erfolgt vorzugsweise im Rahmen einer periodischen technischen Fahrzeugüberprüfung an einem Fahrzeug 2 mit einem Verbrennungsmotor 10 in einer Werkstatt 1, oder einer Überprüfungsstelle, wie in Fig.1 dargestellt. Am Auspuff 3 des Fahrzeugs 2 wird mit einer Abgassonde 4 Abgas entnommen und einem Messgerät 5 zugeführt. Im Messgerät 5 ist ein NOx-Sensor 6 vorgesehen, der die NOx-Emissionen im Abgas misst. Der NOx-Sensor 6 ist mit einer Auswerteeinheit 7 verbunden, die das vom NOx-Sensor 6 gelieferte Messsignal auswertet. Dabei ist es an sich nebensächlich welcher Art NOx-Sensor verwendet wird.

Im Abgasstrang 12 des Fahrzeugs 2 (also zwischen Verbrennungsmotor 10 und Auspuff 3) sind in modernen Fahrzeugen 2 verschiedene bekannte Abgasnachbehandlungssysteme 11 zur Verringerung der NOx-Emissionen (gegebenenfalls in Zusammenwirken verschiedener Systeme) angeordnet. Beispielsweise sei ein Katalysator (Drei-Wege-Katalysator, NOx-Speicherkatalysator (NSC), usw.), ein Dieselpartikelfilter (DPF) (auch mit katalytischer Beschichtung (CSF)), ein NOx-Adsorber (LNT), ein System zur selektiven katalytischen Reduktion mit Ammoniak (SCR), etc., genannt. Weiters finden in modernen Fahrzeugen 2 auch andere Konzepte zur Reduzierung der NOx-Emissionen Anwendung. Hier sei z.B. die Abgasrückführung (EGR) genannt. Im fehlerfreien Betrieb des Fahrzeugs 2 kann mit herkömmlicher Werkstattmesstechnik daher keine aussagekräftige NOx-Messung durchgeführt werden, da es zu kaum messbaren NOx-Emissionen kommt. Um bei einem Fahrzeug 2 sicher und aussagekräftig einen Fehler im Abgasstrang 12, der die NOx-Emissionen beeinflusst, feststellen zu können wird erfindungsgemäß die folgende, anhand der Fig.2 beschriebene Testprozedur angewendet.

Das Fahrzeug 2 steht still und befindet sich im Leerlauf (Gang in neutraler Position). Das Fahrzeug 2 muss folglich auf keiner Rolle angeordnet sein, was den Test erheblich erleichtert. Der Verbrennungsmotor 10 des Fahrzeugs 2 wird zum Startzeitpunkt tₛ vorzugsweise aus seiner für den Verbrennungsmotor 10 bzw. das Fahrzeug 2 eigenen Leerlaufdrehzahl n_{L} innerhalb einer Zeit t₁ von 3 bis 12 Sekunden, vorzugsweise 4 bis 11 Sekunden, auf eine Zieldrehzahl n_{z} von 30 - 70% der Höchstdrehzahl des Verbrennungsmotors 10 beschleunigt. Als Startdrehzahl nₛ wird vorzugsweise eine Drehzahl zwischen der vorgegebenen Leerlaufdrehzahl n_{L} des Verbrennungsmotors 10 und einer Drehzahl von 15 - 20% der Höchstdrehzahl des Verbrennungsmotors 10 herangezogen. Die Verwendung der Leerlaufdrehzahl n_{L} ermöglicht einen besonders einfachen Ablauf des Tests. Bei Dieselmotoren liegt die Höchstdrehzahl typischerweise im Bereich von 5.500min⁻¹, was eine Zieldrehzahl n_{z} von 1.650min⁻¹ bis 3.850min⁻¹ ergäbe. Vorteilhaft wird eine Zieldrehzahl von 2.500min⁻¹ +/- 250min⁻¹ angestrebt. Nach dem Erreichen der Zieldrehzahl n_{z} wird diese für eine Zeitspanne t₂ von zumindest 3 Sekunden, vorzugsweise 5 Sekunden, gehalten. Danach wird der Verbrennungsmotor 10 zum Zeitpunkt tₑ (= tₛ + t₁ + t₂) des Endes der Testprozedur vorzugsweise wieder abrupt auf die Leerlaufdrehzahl n_{L} gebracht. Abrupt bedeutet hierbei, dass die Drehzahl rasch gesenkt wird, beispielsweise in dem das Gaspedal abrupt losgelassen wird. Das ergibt für die Testprozedur ein Drehzahlprofil wie in Fig.2 dargestellt. Für die Durchführung der Testprozedur soll die Drehzahl n des Verbrennungsmotors also innerhalb des ergebenden schraffierten Bereiches liegen.

Durch diese Testprozedur wird einerseits sichergestellt, dass der Verbrennungsmotor 10 genügend Leistung bringen muss, um die Schwungmasse zu bewegen. Die Testprozedur stellt auch eine ausreichend flache Drehzahlrampe dar, sodass sichergestellt ist, dass die Abgasnachbehandlungssysteme 11 greifen.

Für die Durchführung der Testprozedur ist es vorteilhaft, das Fahrzeug 2, bzw. den Verbrennungsmotor 10 und den Abgasstrang 12, zu konditionieren, also auf einen bestimmten Zustand zu bringen. Hierbei wird vorzugsweise die Temperatur des Abgases am Auspuff 3 geprüft, um festzustellen, ob der Abgasstrang 12 und die darin enthaltenen Abgasnachbehandlungssysteme 11 auf Betriebstemperatur sind. Alternativ oder zusätzlich kann auch die Temperatur des Kühlwassers oder die Öltemperatur herangezogen werden. Diese Werte können auch über die Diagnoseschnittstelle des Fahrzeugs 2 ausgelesen werden (z.B. mittels herkömmlicher Diagnosegeräte, die in Werkstätten vorhanden sind). Über die Diagnoseschnittstelle können aber auch Temperaturen des Abgasstranges 12 bzw. des Abgasnachbehandlungssystems 11 ausgelesen werden. Beispielsweise kann standardmäßig die Temperatur eines NOx-Katalysators über die Diagnoseschnittstelle ausgelesen werden. Zur Konditionierung könnte das Fahrzeug 2 beispielsweise vor der Durchführung der Testprozedur für eine bestimmte Zeitspanne bewegt (gefahren) werden, um den Abgasstrang auf Betriebstemperatur zu bringen. Gleichfalls ist es vorteilhaft, wenn für die Durchführung der Testprozedur Verbraucher des Fahrzeugs 2, wie z.B. die Klimaanlage, Soundsystem, Multimediasystem, Sitzheizung, etc., ausgeschaltet sind.

Über das Auslesen einer Temperatur des Abgasstranges 12 kann, auch automatisiert, überprüft werden, ob das Fahrzeug 2 für die bevorzugte Durchführung der Testprozedur bereit ist. Das ist dann der Fall, wenn die ausgelesene Temperatur einen vorgegebenen Grenzwert überschreitet.

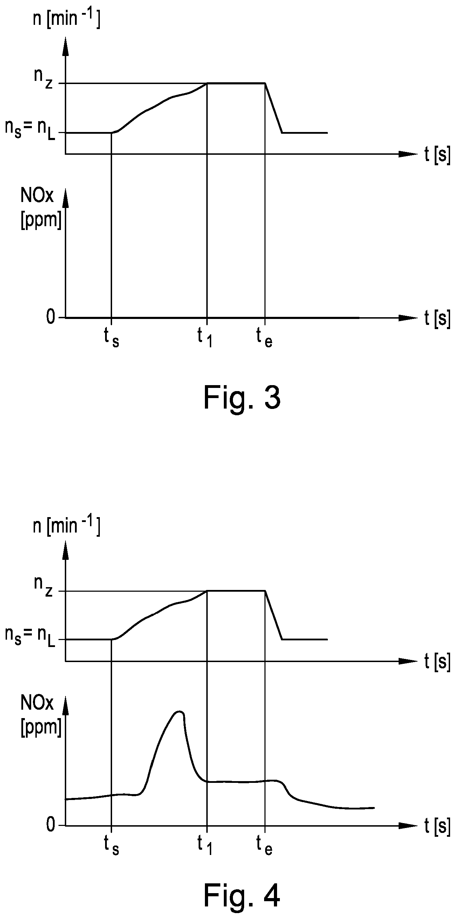

Während der Durchführung der Testprozedur werden die NOx-Emissionen mit dem NOx-Sensor 6 erfasst und in der Auswerteeinheit 7 ausgewertet. Das wird nachfolgende anhand unter Bezugnahme auf die Figuren 3 bis 6 erläutert.

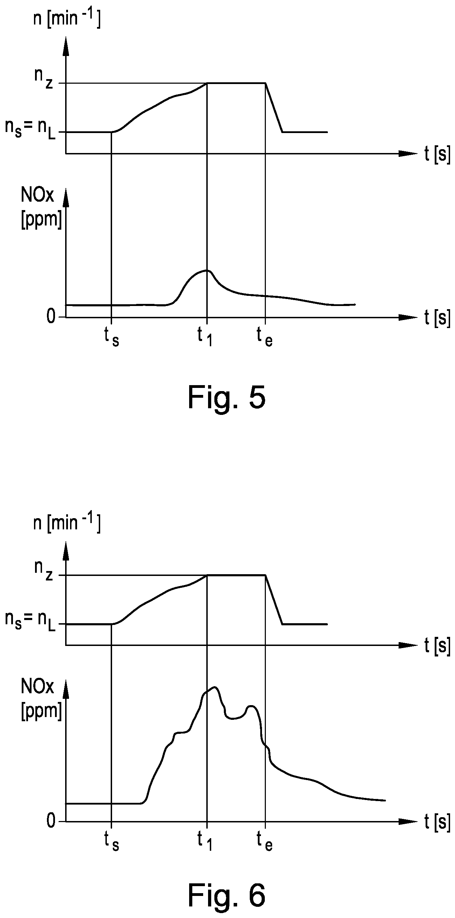

Die Fig.3 zeigt die NOx-Emissionen während der Testprozedur ohne Fehler im Abgasstrang 12. Die Testprozedur wurde auf ein 4-Zylinder EU6 Diesel Fahrzeug mit einem Verbrennungsmotor 10 mit ca. 2000ccm Hubraum und einer Leistung von 110kW angewandt. Das Fahrzeug 2 ist mit einer Abgasrückführung und im Abgasstrang 12 mit einem Dieselpartikelfilter mit katalytischer Beschichtung und einem NOx-Adsorber ausgestattet. Der Verbrennungsmotor 10 wurde vor Durchführung der Testprozedur auf eine Kühlwassertemperatur von ungefähr 90°C konditioniert. Die Testprozedur startet bei der Leerlaufdrehzahl von ca. 800min⁻¹ und wird in ca. t₁ = 11s auf die Zieldrehzahl n_{z} von 2500min¹ beschleunigt. Die Zieldrehzahl n_{z} wird für eine Zeit t₂ von ca. 6s gehalten und danach wird die Drehzahl abrupt abgesenkt. Im fehlerfreien Fall treten (zumindest mit verfügbarer Messtechnik in der Werkstatt) kaum messbare NOx-Emissionen von einigen wenigen ppm auf. Fig.4 zeigt dieselbe Testprozedur am selben Fahrzeug 2 bei einem vollständig beladenen NOx-Adsorber. Man erkennt einen deutlichen Anstieg der NOx-Emissionen während der Testprozedur. In Fig.5 wird die Testprozedur auf das Fahrzeug 2 mit einem bei 20% Öffnung blockierten Abgasrückführventil dargestellt und in Fig.6 mit einem bei 50% Öffnung blockierten Abgasrückführventil. Auch hier erkennt man jeweils einen deutlichen Anstieg der NOx-Emissionen während der Testprozedur.

Wie aus den Fig.4 bis 6 ersichtlich ergibt sich bei Anwendung der Testprozedur im Fehlerfall im Abgasstrang 12 bzw. im Abgasnachbehandlungssystem 11 bzw. allgemein in einem System des Fahrzeugs 2 zur Reduzierung der NOx-Emissionen (wie z.B. CSF, NSC, LNT, EGR, usw.) ein markanter, sprunghafter Anstieg in den NOx-Emissionen, der auch mit einfachster und nicht notwendiger Weise sehr genauen Messtechnik in der Werkstatt sicher und zuverlässig detektierbar ist. Hierzu kann in der Auswerteeinheit 7 Software implementiert sein, um diesen Anstieg in den NOx-Emissionen zu erfassen und damit um einen Fehler im Fahrzeug 2 festzustellen. Hierbei können natürlich verschiedene Auswertemethoden angewandt werden. Im einfachsten Fall wird einfach das Überschreiten eines definierten NOx-Grenzwertes überwacht. Ebenso kann der Maximalwert der NOx-Emissionen bestimmt und beurteilt werden, z.B. wieder durch Vergleich mit einem Grenzwert. Weiters könnte die Anstiegsrate der NOx-Emissionen ausgewertet werden und bei einer bestimmten Anstiegsrate von einem Fehler ausgegangen werden. Gleichfalls könnte die Gesamtmenge an ausgestoßenen NOx während der Testprozedur bestimmt werden, z.B. durch Integration der NOx-Emissionen über die Zeit t. Selbstverständlich können auch mehrere Auswertemethoden kombiniert werden, um zu einer Aussage über einen Fehler zu kommen. Entscheidend ist, dass aufgrund der Testprozedur im Fehlerfall ein markanter, erfassbarer Anstieg der NOx-Emissionen hervorgerufen wird, der eine zuverlässige Aussage darüber zulässt, ob ein Fehler im Fahrzeug 2, insbesondere in Systemen, die die NOx-Emissionen beeinflussen, vorliegt oder nicht.

Das kann sogar so weit gehen, dass für ein bestimmtes Fahrzeug 2 verschiedene NOx-Emissionsverläufe (Maximalwert, Anstiegsrate, Integralwerte, usw.) während einer vorgegebenen Testprozedur bei verschiedenen Fehlern hinterlegt sind. Durch Vergleich eines erfassten Verlaufs der NOx-Emissionen während der Testprozedur kann man dann auch auf einen bestimmten Fehler schließen, was die Fehlersuche erleichtern kann.

Um einen Anstieg in den NOx-Emissionen während der Testprozedur sicher erkennen zu können, muss der Anstieg natürlich zumindest größer als ein allfälliges Messrauschen des NOx-Sensors 6 und größer als die Messauflösung bzw. die Auflösung einer möglichen Quantisierung eines Messsignals und größer als ein bekannter Messfehler sein. Chemische Sensoren haben typischerweise eine Genauigkeit von 50ppm bei einer Messauflösung von 1ppm. Bei Verwendung von chemischen Sensoren wird ein Grenzwert für einen Maximalwert der NOx-Emission folglich deutlich höher als 50ppm, beispielsweise 100ppm, liegen müssen, um eine verlässliche Erkennung zu gewährleisten.

## Patentansprüche

1. Verfahren zur Überprüfung der NOx-Emissionen eines Fahrzeugs (2) mit Verbrennungsmotor (10) und mit einem System zur Reduzierung der NOx-Emissionen, **dadurch gekennzeichnet, dass** der Verbrennungsmotor (10) im Stillstand und im Leerlauf des Fahrzeugs (2) einer Testprozedur unterworfen wird, bei der der Verbrennungsmotor (10) aus einer Startdrehzahl (nₛ) zwischen einer vorgegebenen Leerlaufdrehzahl (n_{L}) und einer Drehzahl (n) von 15 - 20% der Höchstdrehzahl des Verbrennungsmotors (10) innerhalb einer Zeit (ti) von 3 bis 12 Sekunden, vorzugsweise 4 bis 11 Sekunden, auf eine Zieldrehzahl (n_{z}) von 30 - 70% der Höchstdrehzahl des Verbrennungsmotors (10) beschleunigt wird, nach dem Erreichen der Zieldrehzahl (n_{z}) diese für eine Zeitspanne (t₂) von zumindest 3 Sekunden, vorzugsweise mindestens 5 Sekunden, gehalten wird und danach die Drehzahl (n) wieder abgesenkt wird, **dass** während der Durchführung der Testprozedur die NOx-Emission im Abgas des Fahrzeugs (2) gemessen wird, indem am Auspuff (3) des Fahrzeugs (2) Abgas mit einer Abgassonde (4) entnommen und einem Messgerät (5) zugeführt wird **und dass** auf einen Fehler im System zur Reduzierung der NOx-Emissionen des Fahrzeugs (2) geschlossen wird, wenn in den gemessenen NOx-Emissionen während der Testprozedur ein Anstieg erkannt wird.

2. Verfahren nach Anspruch 1, **dadurch gekennzeichnet, dass** als Zieldrehzahl (n_{z}) eine Drehzahl von 2.500min⁻¹ +/- 250min⁻¹ verwendet wird.

3. Verfahren nach Anspruch 1 oder 2, **dadurch gekennzeichnet, dass** der Verbrennungsmotor (10) vor dem Beginn der Testprozedur auf eine vorgegebene Kühlwasser-, Öl- oder Abgastemperatur gebracht wird.

4. Verfahren nach Anspruch 1 oder 3, **dadurch gekennzeichnet, dass** über eine Diagnoseschnittstelle des Fahrzeugs (2) eine Temperatur des Abgasstranges (12) des Fahrzeugs (2) ausgelesen wird und die Testprozedur gestartet wird, wenn die ausgelesene Temperatur einen vorgegebenen Grenzwert überschreitet.

## Claims

1. Method for checking the NOx emissions of a vehicle (2) having an internal combustion engine (10) and a system for reducing NOx emissions, **characterized in that** the internal combustion engine (10) is subjected to a test procedure when the vehicle (2) is at a standstill and idling, in which procedure the internal combustion engine (10) is accelerated from a starting speed (nₛ) between a predetermined idling speed (n_{L}) and a speed (n) of 15-20% of the maximum speed of the internal combustion engine (10) to a target speed (n_{z}) of 30-70% of the maximum speed of the internal combustion engine (10) within a time (t₁) of 3 to 12 seconds, preferably 4 to 11 seconds, and, after the target speed (n_{z}) has been reached, said target speed is held for a time period (t₂) of at least 3 seconds, preferably at least 5 seconds, and then the speed (n) is reduced again, **that,** during the execution of the test procedure, the NOx emissions in the exhaust gas of the vehicle (2) are measured by taking exhaust gas from the exhaust pipe (3) of the vehicle (2) by means of an exhaust gas probe (4) and supplying said exhaust gas to a measuring device (5), **and in that** a fault in the system for reducing the NOx emissions of the vehicle (2) is inferred if an increase is detected in the measured NOx emissions during the test procedure.

2. Method according to claim 1, **characterized in that** a speed of 2,500 min⁻¹ +/- 250 min⁻¹ is used as the target speed (n_{z}).

3. Method according to either claim 1 or claim 2, **characterized in that** the internal combustion engine (10) is brought to a predetermined cooling water temperature, oil temperature or exhaust gas temperature before the start of the test procedure.

4. Method according to either claim 1 or claim 3, **characterized in that** a temperature of the exhaust tract (12) of the vehicle (2) is read out via a diagnostic interface of the vehicle (2), and the test procedure is started when the read-out temperature exceeds a predetermined threshold value.

## Revendications

1. Procédé de contrôle des émissions de NOx d'un véhicule (2) comportant un moteur à combustion interne (10) et comportant un système de réduction des émissions de NOx, **caractérisé en ce que** le moteur à combustion interne (10) est soumis à une procédure d'essai lorsque le véhicule (2) est à l'arrêt et en marche à vide, au cours de laquelle procédure d'essai le moteur à combustion interne (10) est accéléré depuis une vitesse de rotation de démarrage (nₛ) comprise entre une vitesse de rotation de marche à vide spécifiée (n_{L}) et une vitesse de rotation (n) de 15 à 20 % de la vitesse de rotation maximale du moteur de combustion interne (10) en une période de temps (t₁) de 3 à 12 secondes, de préférence de 4 à 11 secondes, jusqu'à une vitesse de rotation cible (n_{z}) de 30 à 70 % de la vitesse de rotation maximale du moteur à combustion interne (10), est maintenue, après avoir atteint la vitesse de rotation cible (n_{z}), à ladite vitesse de rotation cible pendant une période de temps (t₂) d'au moins 3 secondes, de préférence d'au moins 5 secondes, puis la vitesse de rotation (s) est à nouveau réduite de sorte que l'émission de NOx dans le gaz d'échappement du véhicule (2) est mesurée pendant l'exécution de la procédure d'essai en prélevant, au niveau du pot d'échappement (3) du véhicule (2), le gaz d'échappement au moyen d'une sonde de gaz d'échappement (4) et est acheminée vers un dispositif de mesure (5) **et en ce qu'**un défaut dans le système de réduction des émissions de NOx du véhicule (2) est déduit si dans les émissions de NOx mesurées, une augmentation est détectée au cours de la procédure d'essai.

2. Procédé selon la revendication 1, **caractérisé en ce qu'**une vitesse de rotation de 2 500 min⁻¹ +/- 250 min⁻¹ est utilisée comme vitesse de rotation cible (n_{z}).

3. Procédé selon la revendication 1 ou 2, **caractérisé en ce que** le moteur à combustion interne (10) est amené à une température spécifiée d'eau de refroidissement, d'huile ou de gaz d'échappement avant le début de la procédure d'essai.

4. Procédé selon la revendication 1 ou 3, **caractérisé en ce qu'**une température de la conduite de gaz d'échappement (12) du véhicule (2) est lue par l'intermédiaire d'une interface de diagnostic du véhicule (2) et que la procédure d'essai est lancée lorsque la température lue dépasse une valeur limite spécifiée.
